(19) Europäisches Patentamt

European Patent Office

Office européen des brevets

(11) EP 1 342 850 A2

(12) EUROPEAN PATENT APPLICATION

(43) Date of publication:
10.09.2003 Bulletin 2003/37

(51) Int Cl.$^7$: E01C 23/09, B62D 7/08

(21) Application number: 02017274.8

(22) Date of filing: 01.08.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 06.03.2002 JP 2002060514

(71) Applicant: Shiga Sangyo Kabushiki Kaisha
Fujisawa-shi, Kanagawa-ken (JP)

(72) Inventor: Kodama, Toshiharu
Fujisawa-shi, Kanagawa-ken (JP)

(74) Representative: Klocke, Peter, Dipl.-Ing.
ABACUS Patentanwälte
Klocke Späth Barth
European Patent and Trademark Attorneys
Kappelstrasse 8
72160 Horb (DE)

(54) **Cutting apparatus for cutting paved road**

(57)    Geometric relations among components of a wheel angle shift mechanism of a cutting apparatus for cutting paved roads are theoretically determined by utilizing trigonometric and inverse trigonometric functions so that wheel angles are changed and fixed by a one-touch handling for a precise circular or straight movement of the cutting apparatus for a circular or straight cutting operation. Based on calculations the cutting apparatus is arranged as follows. A support axis of a centering jig 8 is detachably inserted into a support point S0, being functioned as a cutting center, of a chassis BS equipped with two pairs of front wheels and a pair of rear wheels. A wheel angle shift mechanism K for shifting as desired from a straight movement to a circular movement and vice versa is arranged between a pair of the rear wheels. A first rear wheel and a second rear wheel having respective vertical revolving axes 1 and 2 are arranged so as to face each other at offset positions of respective wheels. The respective revolving axes 1 and 2 are inserted into and supported by cylinder bearings 1a and 2a vertically fixed to a base frame of the chassis BS so as to revolve horizontally. Angle shifts from the circular movement to the straight movement and vice versa, are performed by the one-touch handling of a shift lever 5 attached to the wheel angle shift mechanism K.

FIG. 1

**Description**

BACKGROUND OF THE INVENTION

1. Field of the Invention

The present invention relates to a cutting apparatus for cutting paved roads equipped with a wheel angle shift mechanism for shifting a circular cutting position to a straight cutting position and vice versa, and for fixing the position afterward, which is capable of being operated by a one-touch handling.

2. Brief Description of the Related Art

Cutting apparatuses for cutting paved roads used in roads constructions and the like have been known as disclosed in (1) Japanese laid open patent No.7-279118, (2) Japanese laid open patent No.63-55204, (3) Japanese laid open utility model No.3-72904 and so forth.

However, in example (1), since the cutter driving unit and the main body of the apparatus are arranged outside of the cutting circle, the apparatus requires a wide area for cutting operations. In example (2), though the arrangement of the apparatus is simple such that the driving unit is directly connected to the revolving axis of the cutter, it is less practical in its maneuverability and operability. In example (3), the steering device for sifting circular/straight cutting is arranged in the apparatus. However, it is difficult to make the apparatus compact in its size, because the structure of the apparatus is complicated. In addition, the apparatus has a problem in its maneuverability, when it is used for circular cuttings.

The applicant already filed a patent (the Japanese laid open patent No.2001-29516) relating to a cutting apparatus for cutting paved roads. The patent discloses a fairly compact apparatus for cutting paved roads by arranging the cutter and the apparatus inside the cutting circle. Since upright revolving axes of wheels supporting the apparatus are arranged inside of wheels in an offset state, the apparatus can be moved in accordance with a circular or straight cutting mode. In addition, in order to improve a moving stability of the apparatus, the revolving axis of the cutter is positioned between front wheels and rear wheels.

SUMMARY OF THE INVENTION

However, the moving stability of the apparatus during cutting operations is not yet satisfactory, so that the applicant has been tried to invent a more improved apparatus and proposes a new cutting apparatus for cutting paved roads. The proposed apparatus is equipped with a wheel angle shift mechanism capable of shifting a circular cutting position to a straight cutting position and vice versa, and for fixing the position afterward by determining a geometric arrangement among components of the wheel angle shift mechanism based on arithmetic calculations.

The present invention is carried out in view of the above-mentioned problems in order to provide a cutting apparatus for cutting paved roads circularly or straightly having a wheel angle shift mechanism capable of shifting a circular cutting position to a straight cutting position and vice versa, and for fixing the position afterward through simple operations by arranging components of the apparatus based on arithmetic calculations, basically using trigonometric functions and inverse trigonometric functions.

The above-mentioned problems are solved by the invention as claimed.

BRIEF DESCRIPTION OF THE DRAWINGS

FIG.1 is a plan view showing essential components constituting the wheel angle shift mechanism of the cutting apparatus for cutting paved roads by the present invention.

FIG.2 is a schematic view illustrating geometric relations among essential components constituting the wheel angle shift mechanism.

FIG.3A is a schematic status illustrating a rear wheel positioning for the straight cutting and FIG.3B is a schematic status illustrating the rear wheel positioning for the circular cutting.

FIG.4A is a schematic view illustrating a geometric relation among main components constituting the wheel angle shift mechanism for the straight cutting and FIG.4B is a schematic view illustrating the geometric relation among main components constituting the wheel angle shift mechanism for the straight cutting.

FIG.5 is a detailed schematic view illustrating a geometric relation among main components constituting the wheel angle shift mechanism.

FIG.6 is a side view of the cutting apparatus for cutting paved roads showing the cutting apparatus set at a ready position by the centering jig for determining a cutting center before cutting.

FIG.7A is an elevation view of the cutting apparatus for cutting paved roads showing a position where the cutter is raised by a tilting device KE, and FIG.7B is a plan view illustrating a geometric relation between the supporting axis of the tilting device and a support point S0, as the center of the cutting radius.

FIG.8 is an elevation view of the cutting apparatus for cutting paved roads showing a status where the cutter of the cutting apparatus is lowered to a cutting position.

DETAILED DESCRIPTION OF THE PREFERRED EMBODIMENTS

Hereinafter embodiments of the cutting apparatus for cutting paved roads by the present invention are explained in detail as referring to drawings.

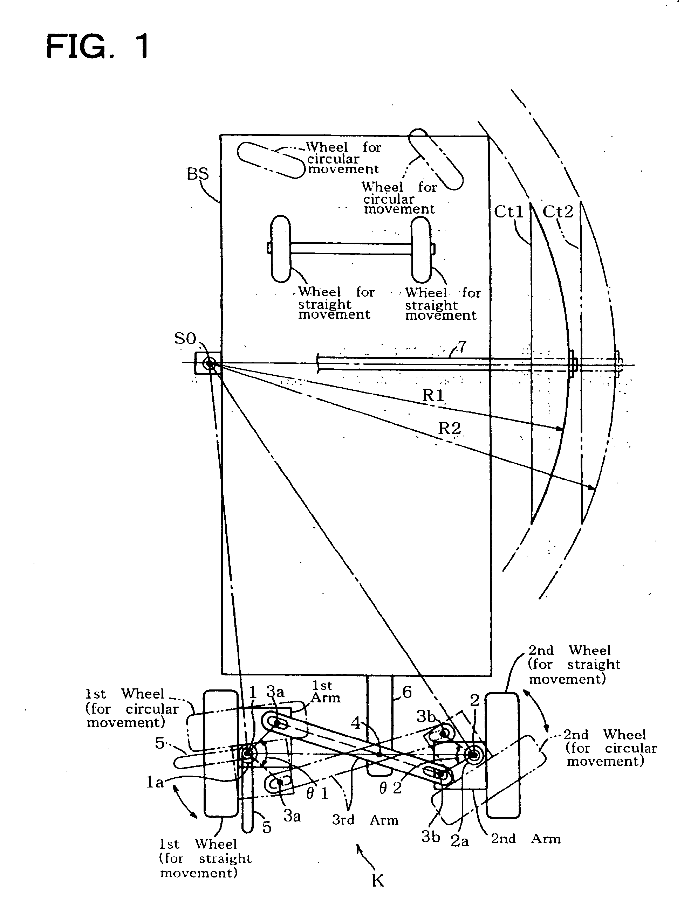

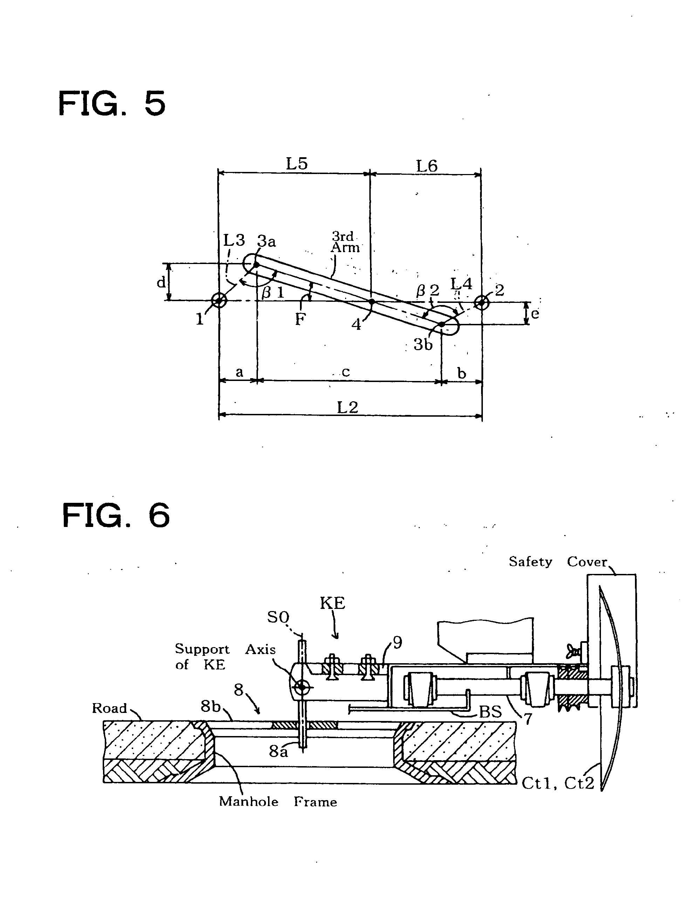

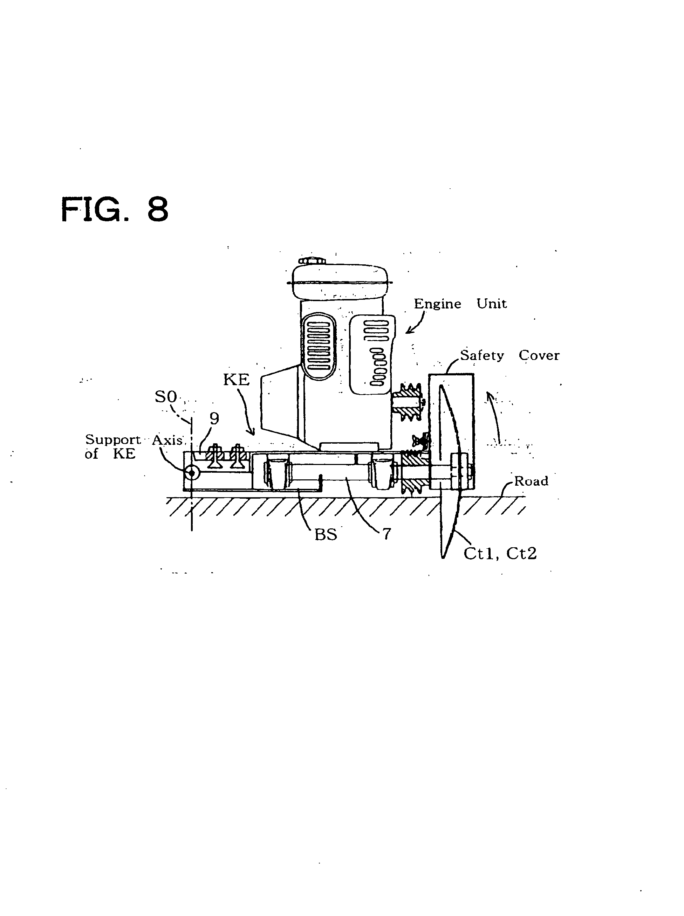

As shown in FIG.8, the cutting apparatus for cutting paved roads by the present invention comprises an engine unit to rotate spherical shell shaped disk cutters Ct1 and Ct2 for the circular cutting, and a chassis BS equipped with wheels for moving the cutting apparatus circularly or straightly. The engine unit is mounted on the chassis BS and arranged inside the cutting radius of the cutter, and equipped with the tilting device KE. As shown in FIG.1, a rotating axis 7 of the cutter is arranged between front wheels and rear wheels of the cutting apparatus. Among these wheels two pairs of front wheels are arranged respectively for exclusive uses, namely one pair for the straight movement is switched to the another pair for the circular movement and vice versa by a handle (not shown). The cutting radius is changeable or adjustable, for example, from R1 to R2 or from R2 to R1 (see FIG.1) by a slider 9 which moves along the rotating axis 7 of the cutter in a radial direction of the cutting circle as shown in FIG.6. A support axis 8a is detachably inserted to the support point S0, which functions as the cutting center, of the chassis BS. The lower end of the support axis 8a is inserted into a center hole of a flat disk cover 8b, which constitute a centering jig 8 for determining the cutting center. As shown in FIG.1, a pair of the rear wheels, comprising the first wheel and the second wheel, are used for the circular or straight movement of the cutting apparatus by handling a wheel angle shift mechanism K. The wheel angle shift mechanism K comprises a first arm attached to the first wheel, a second arm attached to the second wheel, a third arm connected to the first arm and to the second arm, and a shift lever 5. Respective vertical revolving axes 1 and 2 of the first and second wheels are arranged at offset positions such that the respective revolving axes 1 and 2 are facing each other inside of and in the vicinity of the first and second wheels. And respective vertical revolving axes are inserted into and supported by cylinder bearings 1a and 2a vertically fixed to a base frame (not shown) of the chassis BS so as to revolve horizontally. The above-mentioned mutually facing first and second wheels for the circular or straight movement can be shifted from the straight cutting angles to the circular cutting angles and determined their respective angles afterward, and vice versa by a one-touch handling of the shift lever 5. Among the wheels for the circular or straight movement, the first wheel is arranged on a radial line from the support point S0 and is used as an inner wheel during the circular movement. The second wheel is arranged apart from the first wheel by a determined distance so as to face each other and is used as an outer wheel during the circular movement. The first and second wheels respectively have the first arm and the second arm formed as blocks, fixed to respective revolving axes 1 and 2 formed at offset positions from the wheels, where the first and second arms are indirectly connected via the third arm. An arm support axis 4 is formed at the middle position of the third arm so that the third arm is rotatably fixed to a bracket 6 of the chassis BS. The wheel angles from the circular movement to the straight movement can be shifted easily by the shift lever 5 arranged at the upper portion of the revolving axis 1 attached to the first wheel such that angles of the first and second wheels on circles around support point S0 can be adjusted and determined. When the shift lever 5 is shifted in a reverse direction, the wheel angles are shifted from the straight movement to the circular movement.

As shown in FIGs.6, 7A, 7B and 8, the support point S0, the center of the cutting circle, is formed so as to cross a support axis of the tilting device KE. The tilting device KE is arranged so as to be slidably moved along the revolving axis 7 of the cutter and its position is determined by handling the slider 9, when the cutting radius is shifted from R1 to R2 respectively corresponding to the spherical shell shaped disks Ct1 and Ct2.

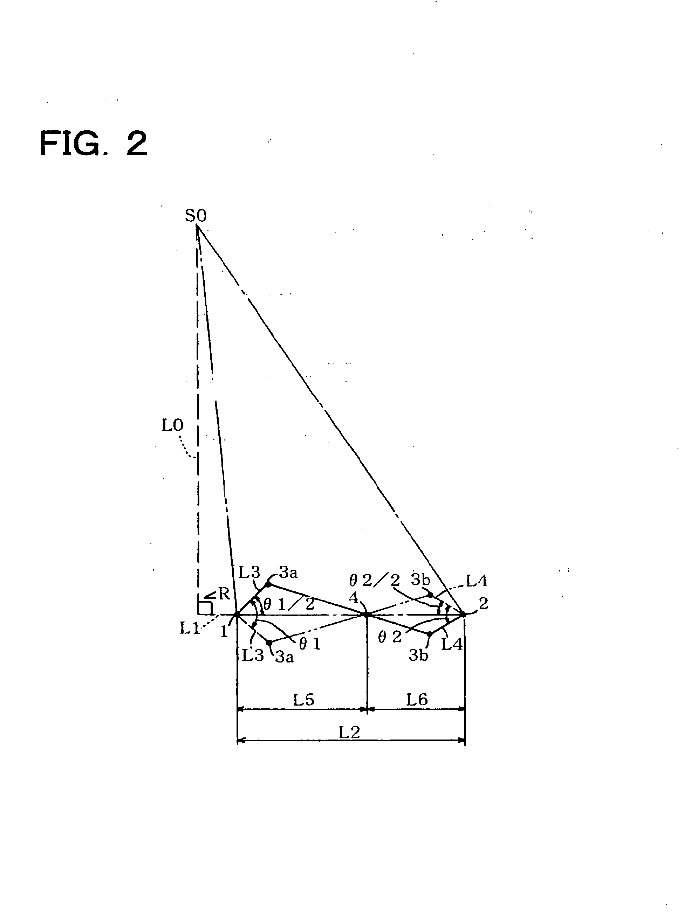

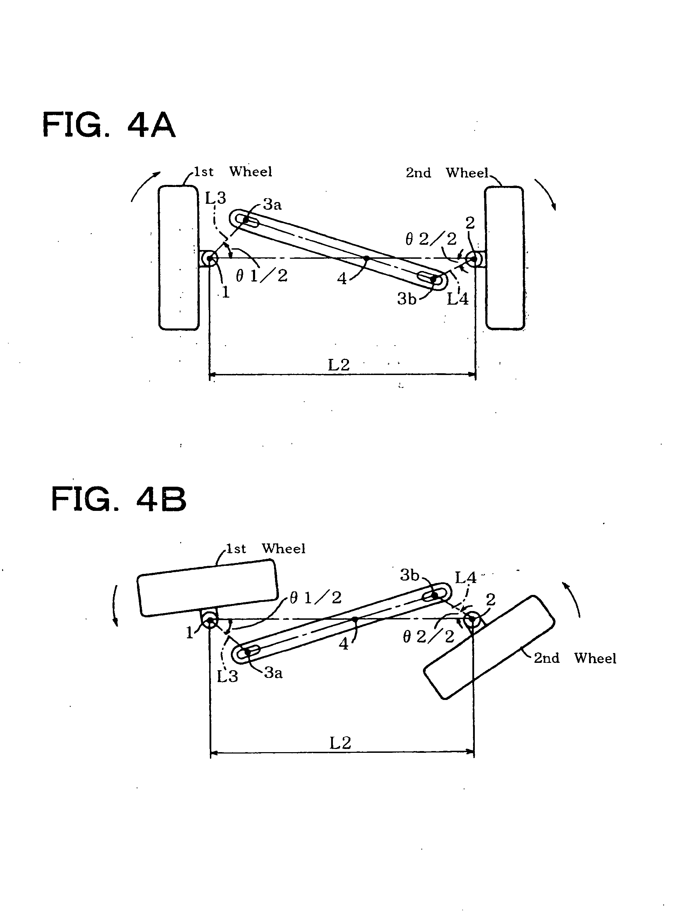

Hereinafter an arithmetic procedure how to determine a dimension of each component constituting the wheel angle shift mechanism K is explained by referring to FIGs.2, 3A, 3B, 4A, 4B and 5.

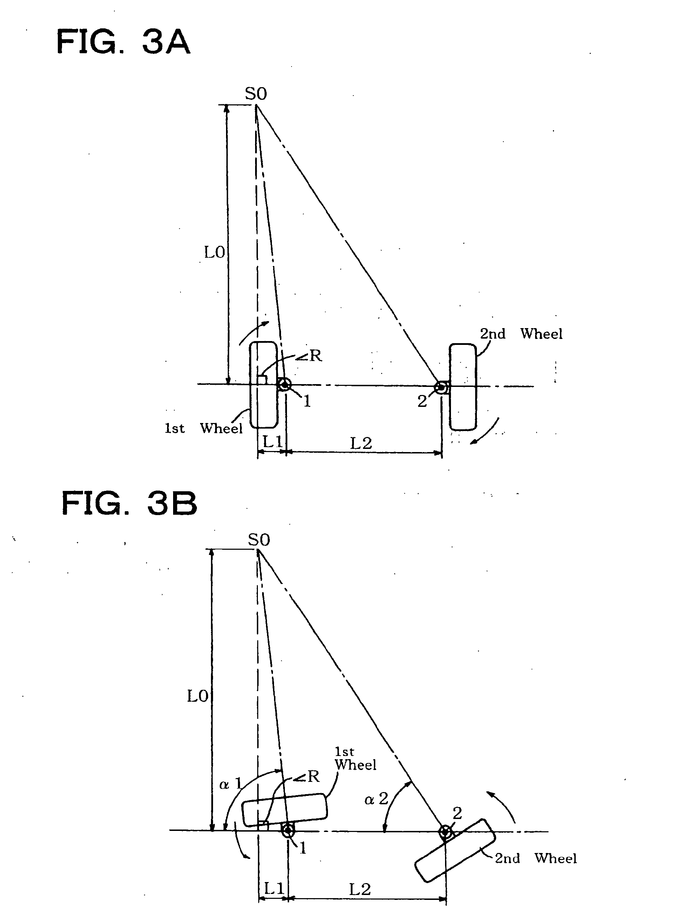

A distance of a vertical line from the support point S0 of the chassis BS, as the revolving center of the circular cutting, to a base line connecting the revolving axis 1 and the revolving axis 2, is defined as L0. A distance from the revolving axis 1 of the first wheel to the above-mentioned vertical line from the support point S0 of the chassis BS is defined as L1. A distance between the revolving axes 1 and 2 of the first and second wheels is defined as L2. A distance between the revolving axis 1 and a connecting point 3a, where the first arm and the third arm are connected, is defined as L3. A distance between the revolving axis 2 and a connecting point 3b, where the second arm and the third arm are connected, is defined as L4. A shifted angle of the first arm when revolving the third arm around the arm support axis 4 arranged at the middle of the third arm for shifting the wheel angle, is defined as θ1. In the same way, a shifted angle of the second arm is defined as $\theta 2$. After determining the above-mentioned L0, L1, L2, L3 and L4 as values for designing the wheel angle shift mechanism K, an angle $\alpha 1$ (see FIG.3B) formed between the base line connecting the respective revolving axes 1 and 2 of the first and second wheels, and a line from the support point S0 of the chassis BS to the revolving axis 1 of the first wheel, is expressed as follows:

$$\alpha 1 = \tan^{-1}(L0/L1) \tag{1}$$

When 440mm and 25mm are respectively substituted for L0 and L1 in equation (1), the following calculated value is obtained:

$$\alpha 1 = \tan^{-1}(440/25) = \alpha 1 = \tan^{-1} 17.6 = 86.75°.$$

An angle $\alpha 2$ (see FIG.3B) formed between the above-mentioned base line and a line from the support point S0 of the chassis BS to the revolving axis 2 of the second wheel, is expressed as follows:

$$\alpha 2 = \tan^{-1}[L0/(L1 + L2)] \tag{2}$$

When 300mm is substituted for L2 in equation (2), the following calculated value is obtained:

$$\alpha 2 = \tan^{-1}[440/(25+300)] = \alpha 1 = \tan^{-1} 1.35 = 53.47°.$$

When the obtained values of $\alpha 1$ and $\alpha 2$ are respectively put into the shifted angles $\theta 1$ and $\theta 2$, namely, the following values are obtained:

$$\theta 1 = \alpha 1 = 86.75°$$

$$\theta 2 = \alpha 2 = 53.47°.$$

Distances a, b, c, d and e, depicted in FIG.5 are respectively defined as follows. Distance a: a projected distance of L3 on the base line, distance b: a projected distance of L4 on the base line, distance c: a projected distance between the connecting points 3a and 3b on the base line, distance d: a projected distance of L3 on a vertical line to the base line and distance e: a projected distance of L4 on a vertical line to the base line. Respective distances a, b, c, d and e are expressed as the following equations.

$$a = L3 \times \cos(\theta 1/2) \tag{3}$$

$$b = L4 \times \cos(\theta 2/2) \tag{4}$$

$$c = L2 \,\square\, (a + b) \tag{5}$$

$$d = L3 \times \sin(\theta 1/2) \tag{6}$$

$$e = L4 \times \sin(\theta 2/2) \tag{7}$$

When L3 and L4 are respectively set 40mm, calculated values for a, b, c, d and e are obtained.

$$a = 40 \times \cos 43.375 = 29.075\text{mm}$$

$$b = 40 \times \cos 26.735 = 35.724\text{mm}$$

$$c = 300 \ \square \ (29.075 + 35.724) = 235.201\text{mm}$$

$$d = 40 \times \sin 43.375 = 27.471\text{mm}$$

$$e = 40 \times \sin 26.735 = 17.995\text{mm}.$$

An inclined angle of the third arm from the base line defined as F (see FIG.5) is obtained by the following equation:

$$F = \tan^{-1}[(d + e)/c] \tag{8}$$

When the above-calculated values for c, d and e are put into the equation, the following value is obtained:

$$F = \tan^{-1}[(27.471 + 17.995)/235.201] = \tan^{-1} 0.193 = 10.923°.$$

In a straight cutting status, when an angle formed by line L3 and a longitudinal center line of the third arm is defined as $\beta1$ and also when an angle formed by line L4 and the longitudinal center line of the third arm is defined as $\beta2$, a distance L5 from the arm support axis 4 of the third arm 3 to the revolving axis 1 of the first wheel and a distance L6 from the arm support axis 4 of the third arm to the revolving axis 2 of the second wheel, are respectively calculated as follows.

$$L5 = [(L3 \times \sin \beta1)/ \sin (\beta1 + \theta1/2)] \tag{9}.$$

When the obtained value is substituted for $\beta1$ in Here $\beta1 = 180 \ \square$
$(\theta1/2) \ \square \ F$ (see FIG.5).
Therefore, $\beta1 = 180 \ \square \ 43.375 \ \square \ 10.923 = 125.702°$. equation (9), the following value for L5 is obtained:

$$L5 = [(40 \times \sin 125.702)/ \sin (125.702 + 43.375)]$$

$$= [(40 \times 0.812/0.189)] = 32.480/0.189 = 171.852 \ \square \ 171.9.$$

L6 is calculated in the same way as L5.

$$L6 = [(L4 \times \sin \beta2)/ \sin (\beta2 + \theta2/2)] \tag{10}$$

Here $\beta2 = 180 \ \square \ (\theta2/2) \ \square \ F$ (see FIG.5).
Therefore $\beta2 = 180 \ \square \ 26.735 \ \square \ 10.923 = 142.342°$. When the obtained value is substituted for $\beta2$ in equation (10), the following value for L6 is obtained:

$$L6 = [(40 \times \sin 142.342)/ \sin (142.342 + 26.735)]$$

$$= [(40 \times 0.611/0.189)] = 24.440/0.189 = 129.312 \ \square \ 129.3.$$

When the obtained values are applied to the respective components, the wheel angle shifting mechanism capable of shifting circular/straight cutting by the one-touch handling can be arranged accurately.

In the present embodiment respective pairs of front and rear wheels are arranged on the cutting apparatus, but a cutting apparatus with one front wheel, namely, a three-wheeled cutting apparatus is also possible. However, when a cutting radius is small, the four-wheeled cutting apparatus is better than the three-wheeled cutting apparatus for a stable circular cutting operation.

In the present embodiment, two cutting diameters for the circular cutting, 1m and 1.2m, are selected based on sizes of manholes employed in water supply and drainage systems, underground power supply systems, gas supply systems, underground telephone networks and the like in Japan.

A radius R1 depicted in FIG. 1 corresponds to a 1m cutting diameter, which means the spherical shell shaped disk cutter Ct1 forms a portion of a sphere with a 500mm radius. And a radius R2 corresponds to a 1.2m cutting diameter, which means the spherical shell shaped disk cutter Ct2 forms a portion of a sphere of a 600mm radius.

A pair of front wheels for the straight movement and another pair of front wheels for the circular movements are arranged independently. Both pairs of front wheels are arranged for being lifted by the handle (not shown) so that either one of pairs can be selected for straight or circular cutting operations. The cutter for the straight cutting is exchanged to the cutter for the circular cutting and vice versa in accordance with the selected pair of front wheels.

Working effects of the present invention are explained as referring to the above-mentioned arrangements and drawings.

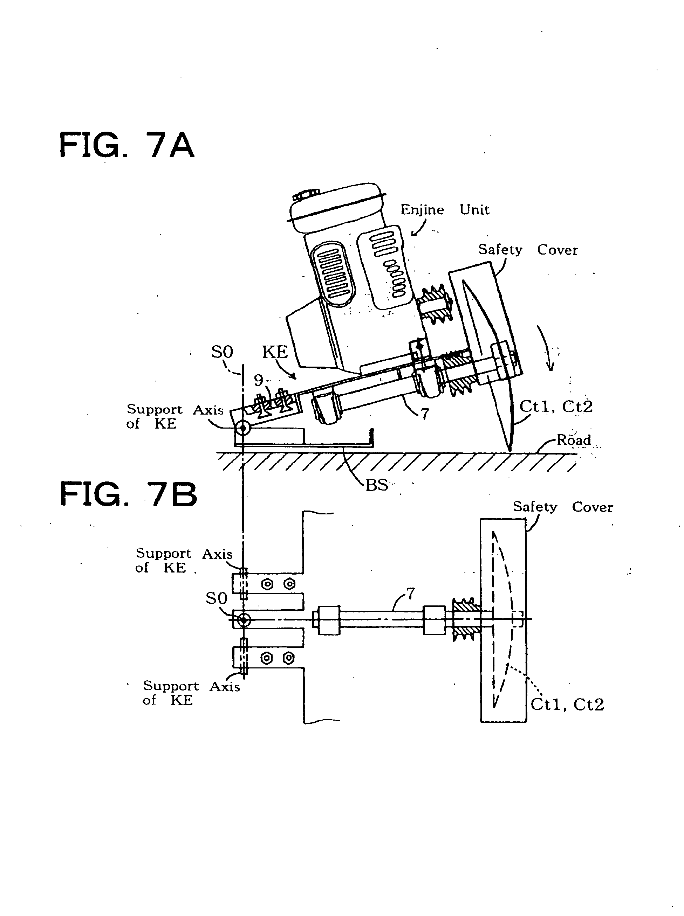

After arranging the cutting apparatus to meet conditions of a cutting site, it is transported to the site. When the cutting diameter is 1m, namely, R1 is 500mm, the cutter Ct1 forming a portion of the sphere with the 500mm radius is fitted to a predetermined position of the cutting apparatus. In this stage, the engine unit for driving the cutter is lifted upward by a handle (not shown) of the tilting mechanism KE (FIG.7a). And the cutter itself is positioned apart from a road surface of the site. After removing a manhole cover, the flat disk cover 8b of the centering jig 8 with a corresponding size to the removed manhole cover is temporarily fitted to the manhole. When the shift lever 5 is handled by the one-touch handling, the wheel angle shift mechanism K is shifted to the circular cutting position (in the embodiment, $\theta 1 = \alpha 1 = 86.75°$) where the first wheel is revolved by 86.75° and shifted to a position depicted by a two-dot chain line as shown in FIG.1, simultaneously the second wheel is revolved by 53.47° and shifted to a position depicted by a two-dot chain line as shown in FIG.1. A locking mechanism (not shown) to lock the shifted angles is arranged in the shift lever 5. The locked shift lever 5 is unlocked when the shift lever 5 is raised with a predetermined distance so that the shift lever 5 is revolved to the left or to the right and is shifted to the circular cutting position or straight cutting position, then the shift lever 5 is returned to a horizontal position and locked for the next one-touch shift handling.

The raised cutter Ct1 is lowered by handling the tilting mechanism KE until a blade arranged on a periphery of the cutter is contacted to a predetermined position of the road (see FIG.8). Then a switch of the engine unit is switched on so as to drive the cutter Ct1 for cutting the road up to a predetermined depth (in this stage the revolving axis 7 is positioned almost horizontally). After setting a pair of the front wheels for circular cutting and when the apparatus is moved forward by pushing a gripping handle (not shown) of the cutting apparatus, a precise and smooth circular cutting is executed due to setting the wheel angle shift mechanism K at the circular movement.

Since the upper surface of the flat disk cover 8b of the centering jig 8 with the corresponding size to the removed manhole cover temporarily fitted to the manhole, so as to determine the support point S0 of the chassis BS as the revolving center during the circular cutting, is arranged on the same plane as the upper surface of the road, wheels can be moved precisely on the predetermined circle during the circular cutting.

When transferring the cutting apparatus as well as when cutting straightly, the shift lever 5 is shifted from the circular cutting to the original position by the one-touch handling so as to work the wheel angle shift mechanism K, so that the first wheel is revolved reversely by $\theta 1$ (86.75°), simultaneously the second wheel is revolved reversely by $\theta 2$ (53.47°), thus the first and second wheels are set at a parallel position depicted by solid lines as shown in FIG.1.

The cutting radius of the cutting circle can be changed/adjusted by the slider 9 which enables the engine unit together with the cutter move along the revolving axis 7 of the cutter arranged on a diameter of the cutting circle, as the support point S0 of the chassis BS, the center of the revolving (or cutting circle), being fixed.

The centering jig 8 is arranged such that the support axis 8a is detachably inserted into a hole forming the support point S0 of the chassis BS and a lower portion of the support axis 8a is inserted into the center of the flat disk cover 8b. If the flat disk cover 8b with a size corresponding to a size of the manhole at the cutting site is selected beforehand, a centering procedure for the circular cutting operation is executed without difficulties. The centering procedure is also carried out by employing anchor bolts or the like in place of utilizing the manhole cover.

When the center of the revolving axis 1 of the first wheel is positioned on a line from the support point S0 of the chassis BS vertical to the base line connecting two revolving axes 1 and 2, the distance L1 becomes zero (see FIGs.2, 3A and 3B) and $\alpha 1$ becomes 90°, therefore $\theta 1$ also becomes 90°, which means the shift angle of the shift lever 5 should be changed from 86.75° to 90°.

In the present embodiment, since the spherical shell shaped disks are used as the cutters, cut portions of the road by the cutter show portions of the spheres (with an arched cross sections), which can be peeled off easily.

Since the cutting apparatus is formed so compact that the whole body of the cutting apparatus can be accommodated within the cutting circle with the 1m diameter, the cutting machine shows its excellent performance without any practical difficulties. The reason is why the compactly arranged cutting apparatus does not extend to an area where a level difference between the road to be cut and a footpath exists, even when there is such difference.

In addition, since the cutting apparatus has mutually changeable two independent pairs of front wheels respectively for the straight movement and the circular movement, and since wheel angles of a pair of the rear wheels can be changed by the one-touch handling, precise straight or circular forward/backward movements of the cutting machine are attained without getting out of predetermined tracks. Consequently, a working performance and an operating performance of the cutting apparatus are raised up to almost their limits.

As explained above, the present invention can provide an excellent cutting apparatus for cutting paved roads having the following features: the support point as the cutting center is arranged at a position apart a little from the chassis; the wheel angle shift mechanism for shifting from the straight to circular movement and vice versa capable of being operated by the one-touch handling is arranged; the geometric relations among components of the wheel angle shift mechanism is determined by trigonometric and inverse trigonometric functions; the number of the components is reduced; a rigidity of the cutting apparatus is raised; stable movements are attained by arranging the front wheels on one side of the revolving axis of the cutter and arranging the rear wheels on the opposite side; and improved working/operating performances and less expensive apparatus are attained by the compact arrangement.

In other words, in the cutting apparatus for cutting paved roads by the present invention, the wheel angle shift mechanism is arranged such that wheel angles for circular/straight movements during circular/straight cuttings are changed and set by the one-touch handling. The geometric relations among components of the wheel angle shift mechanism are theoretically determined by trigonometric and inverse trigonometric functions so as to carry out determining and fixing wheel angles precisely. The rigidity of the cutting apparatus is raised. Stable movements are attained by arranging the front wheels on one side of the revolving axis of the cutter and arranging the rear wheels on the opposite side. Working/operating performances are improved. Less expensive cutting apparatus is obtained by reducing the number of components.

## Claims

1. A cutting apparatus for cutting paved roads comprising:

    an engine unit to rotate a spherical shell disk shaped cutter for a circular cutting;
    a chassis equipped with front wheels and rear wheels for moving said cutting apparatus circularly or straightly;
    a tilting mechanism for lifting/lowering said cutter;
    a rotating axis of said cutter arranged between said front and rear wheels;
    a slider to move and to fix said engine unit along said rotating axis of said cutter in a radial direction for changing and setting a cutting radius;
    a centering jig for determining a cutting center as a support axis being detachably inserted into a support point of said chassis, which functions as the cutting center; and
    a wheel angle shift mechanism arranged between a pair of said rear wheels; wherein:

    said engine unit is mounted on said chassis and is arranged inside a cutting radius of said cutter;
    said front wheels comprise two pairs of wheels respectively for straight and circular movements, are selectively switched from one pair to another pair and vice versa by handling a handle;
    among said wheels a pair of said rear wheels comprising a first wheel and a second wheel, are shifted from the circular movement to the straight movement and vice versa by handling said wheel angle shift mechanism;
    said wheel angle shift mechanism comprises vertical revolving axes attached to said first and second wheels so as to face each other inside and in the vicinity of said wheels at offset positions;
    said respective vertical revolving axes are inserted into and supported by cylinder bearings vertically fixed to a base frame of said chassis so as to be revolved horizontally; and
    said first and second wheels for circular or straight movement are shifted from determined straight cutting angles to determined circular cutting angles and are fixed their respective angles afterward, and vice versa by a one-touch handling of a shift lever.

2. The cutting apparatus according to claim 1, wherein:

among said wheels for the circular or straight movement, said first wheel is arranged on a diameter of a circle formed around said support point of said chassis and is used as an inner wheel during the circular movement; said second wheel is arranged apart from said first wheel by a determined distance so as to face each other and is used as an outer wheel during the circular movement;

said first wheel has a first arm and said second wheel has a second arm, both arms being formed as blocks fixed to the respective revolving axes of said first and second wheels formed at offset positions from said wheels;

the first arm and the second arm are indirectly connected via a third arm;

an arm support axis is formed at the middle position of the third arm so that the third arm is rotatably fixed to a bracket of said chassis;

the determined wheel angles from the circular movement to the straight movement are shifted only by shifting said shift lever arranged on the upper portion of the vertical revolving axis attached to said first wheel at the offset position such that angles of said first and second wheels on the circles around said support point of said chassis are adjusted and determined; and

when said shift lever is shifted in a reverse direction, the wheel angles are shifted from the straight movement to the circular movement.

3. The cutting apparatus according to claim 1, wherein:

a distance of a vertical line from said support point of said chassis, as the revolving center, to a base line connecting the revolving axes of said first and second wheels, is defined as L0;

a distance from the revolving axis of said first wheel to the vertical line from said support point of said chassis is defined as L1;

a distance between the revolving axes of said first and second wheels is defined as L2;

a distance between the revolving axis of said first wheel and a connecting point where the first arm and the third arm are connected, is defined as L3;

a distance between the revolving axis of said second wheel and a connecting point where the second arm and the third arm are connected, is defined as L4;

a shifted angle of the first arm when the third arm is revolved around the arm support axis arranged at the middle of the third arm for shifting the wheel angles, is defined as $\theta 1$; and

a shifted angle of the second arm when the third arm is revolved around the arm support axis arranged at the middle of the third arm for shifting the wheel angles, is defined as $\theta 2$; wherein:

after determining said L0, L1, L2, L3 and L4 as values for designing the wheel angle shift mechanism, an angle a1 formed between the base line connecting the respective revolving axes of the first and second wheels, and a line from said support point of said chassis to the revolving axis of the first wheel, is expressed as follows;

$$\alpha 1 = \tan^{-1}(L0/L1) \tag{1}$$

an angle $\alpha 2$ formed between the base line and a line from said support point of said chassis to the revolving axis of said second wheel, is expressed as follows:

$$\alpha 2 = \tan^{-1}[L0/(L1+L2)] \tag{2}$$

wherein:

$\alpha 1$ is set at the same value as the shifted angle $\theta 1$ of the first arm;

$\alpha 2$ is set at the same value as the shifted angle $\theta 2$ of the second arm;

a projected distance of L3 on the base line is defined as a;

a projected distance of L4 on the base line is defined as b;

a projected distance between the connecting points of the third arm to the first and second arms on the base line is defined as c;

a projected distance of L3 on a vertical line to the base line is defined as d, and

a projected distance of L4 on a vertical line to the base line is defined as e, wherein respective distances a, b, c, d and e are expressed as the following equations:

$$a = L3 \times \cos(\theta 1/2) \tag{3}$$

$$b = L4 \times \cos(\theta 2/2) \tag{4}$$

$$c = L2 \;\square\; (a+b) \tag{5}$$

$$d = L3 \times \sin(\theta 1/2) \tag{6}$$

$$e = L4 \times \sin(\theta 2/2) \tag{7}$$

an inclined angle F of the third arm from the base line is expressed as the following equation:

$$F = \tan^{-1}[(d+e)/c] \tag{8}$$

in a straight cutting status, when an angle formed by the line L3 and a longitudinal center line of the third arm is defined as $\beta 1$, and
an angle formed by the line L4 and the longitudinal center line of the third arm is defined as $\beta 2$, wherein:

a distance L5 from the arm support axis of the third arm to the revolving axis of the first wheel and a distance L6 from the arm support axis of the third arm to the revolving axis of the second wheel, are respectively expressed as follows:

$$L5 = [(L3 \times \sin \beta 1)/ \sin (\beta 1 + \theta 1/2)] \tag{9}$$

$$L6 = [(L4 \times \sin \beta 2)/ \sin (\beta 2 + \theta 2/2)] \tag{10}$$

wherein respective calculated values from said equations are applied to respective components for obtaining said wheel angle shift mechanism capable of being handled by the one-touch handling from the circular cutting to the straight cutting and vice versa so as to fix the wheel angles.

4. The cutting apparatus according to claim 1, wherein:

said centering jig is arranged such that the support axis is detachably inserted into a hole forming said support point of said chassis, and
a lower portion of said support axis is inserted into the center of a flat disk cover with a size corresponding to a size of a manhole at a cutting site.

# FIG. 1

# FIG. 2

# FIG. 3A

# FIG. 3B

# FIG. 4A

# FIG. 4B

# FIG. 5

# FIG. 6

# FIG. 7A

Enjine Unit

Safety Cover

S0    KE

9

Support Axis
of KE

7

Ct1, Ct2

Road

BS

# FIG. 7B

Safety Cover

Support Axis
of KE

S0

7

Support Axis
of KE

Ct1, Ct2

# FIG. 8

Engine Unit

Safety Cover

KE

S0

9

Support Axis of KE

Road

BS 7

Ct1, Ct2